# DEMANDE DE BREVET EUROPEEN

(11) **EP 1 557 930 A1**
(43) Date de publication de la demande: **27.07.2005**
(21) Numéro de dépôt: 05300042.8
(22) Date de dépôt: 19.01.2005
(51) Int. Cl.: H02K 5/26

(54) **Dispositif de solidarisation d'une machine tournante sur un moteur de véhicule**

(30) Priorité: 23.01.2004 FR 0400655
(71) Demandeur: Peugeot Citroen Automobiles, 78140 Velizy-Villacoublay (FR)
(72) Inventeur: Durlicq, Thierry, 78420 CARRIERES-SUR-SEINE (FR)
(74) Mandataire: De Cuenca, Emmanuel Jaime

(57) **Abrégé**

L'invention concerne un dispositif de solidarisation d'une machine tournante (1) sur un moteur de véhicule, ladite machine tournante étant constituée d'au moins une partie fixe et d'une partie mobile, la partie fixe étant constituée d'un carter, la partie mobile étant constituée d'au moins un axe destiné à être mis en rotation par un moyen d'entraînement lié au moteur et/ou la machine tournante, le carter de la machine tournante comportant un moyen de fixation destiné à coopérer avec un moyen faisant support (7).

Selon l'invention, le dispositif de solidarisation se caractérise en ce que le moyen de fixation comprend au moins deux éléments de fixation (2, 3) faisant saillie hors de la périphérie extérieure du carter (1a) de la machine tournante (1), lesdits premier et second éléments (2, 3) de fixation étant disposés perpendiculaire l'un à l'autre.

## Description

L'invention se rapporte à un dispositif de solidarisation d'une machine toumante sur un moteur de véhicule.

Plus particulièrement, le dispositif de solidarisation de l'invention est destiné à la fixation d'une machine tournante sur un moyen faisant support, ladite machine étant notamment constituée d'un carter et d'un axe tournant, le carter étant muni d'un moyen de fixation, la solidarisation étant obtenue par un moyen de serrage coopérant avec le moyen de fixation et le moyen faisant support.

Il est connu des agencements de machines tournantes sur des moteurs de véhicules automobiles. Les machines tournantes comprennent généralement un moyen de fixation nécessaire à leur solidarisation au moteur, ledit moyen de fixation pouvant être constitué d'au moins un élément de fixation muni d'au moins une ouverture au travers de laquelle peut être disposé un moyen de serrage. C'est ainsi que certains brevets décrivent des moyens de fixation pour machine tournante, ledit moyen de fixation se composant notamment d'au moins une patte de fixation faisant saillie hors du carter de l'alternateur et comportant de préférence une ouverture dont la forme est sensiblement cylindrique ou oblongue pour permettre un réglage de la tension d'un moyen d'entraînement en rotation, telle une courroie de transmission de couple. Ladite machine tournante peut être par exemple une machine génératrice de couple et/ou de courant, comportant une partie fixe constituant le carter, et une partie mobile destinée à se mouvoir en rotation, ladite pa rtie mobile étant un axe de rotation à l'extrémité duquel est disposé une poulie coopérant avec la courroie.

Ladite patte de fixation est ainsi destinée à coopérer avec un moyen faisant support qui comporte généralement au moins une ouverture destinée à être disposée de façon adjacente à l'ouverture du moyen de fixation. Il est aussi connu de disposer un moyen de serrage, telle une vis de fixation, au travers des ouvertures afin de procéder à la solidarisation de la machine tournante sur le moteur du véhicule. De manière connue, la vis de fixation est disposée selon une disposition favorisant le montage, à savoir de préférence selon un axe sensiblement parallèle à l'axe de rotation de la machine tournante.

Le moyen faisant support comporte généralement et de préférence des propriétés mécaniques rendant apte l'amortissement des vibrations générées par le fonctionnement du moteur, tout en fournissant la résistance nécessaire au maintien des organes, notamment la machine tournante.

Il est aussi connu que le moyen de fixation, rendant apte le maintien de la machine tournante sur le moyen faisant support, comprend au moins un élément de fixation disposé en périphérie extérieure du carter de la machine tournante. Afin de répartir les efforts liés au montage, la machine tournante peut comprendre au moins deux éléments de fixation. C'est ainsi que nombreux types d'alternateur sont rendus solidaires du moteur par l'intermédiaire d'un type d'éléments de fixation, telles des brides de fixation.

La demanderesse a constaté que, dans des situations de contraintes environnementales sévères, tel un volume alloué à la fonction génération de courant restreint, de tels montages ne sont plus réalisables. En effet, il a été constaté que lorsque le transfert en puissance électrique augmente, ladite fonction associée ne peut être pleinement assurée. Dans le cas où la machine tournante est un alternateur, voire un alterno-démarreur, l'augmentation de la puissance électrique à transmettre est traditionnellement synonyme d'une augmentation de la taille de la machine tournante, de sorte qu'il soit difficile de s'affranchir intégralement des contraintes d'implantations. L'agencement de la machine tournante sur le moteur est alors rendu difficilement réalisable, étant donné que l'une des brides de fixation du carter de la machine tournante ne coopère pas avec le moyen faisant support mais vient en contact avec un organe qui n'est pas destiné à supporter la machine tournante, tel un collecteur d'échappement.

La demanderesse a également constaté que le volume dédié à un dispositif de mise sous tension du moyen de transmission de couple, tel un dispositif du type à galet tendeur, est sensiblement défini par la présence d'organes, tels la machine tournante en partie supérieure et un compresseur de climatisation en partie inférieure. Etant donné que la position du compresseur de climatisation ne peut pas être modifiée, la demanderesse envisage de rehausser le positionnement de la machine tournante de sorte à générer une autre impossibilité de montage, en partie due au fait que, comme précédemment, l'élément de fixation disposé en partie supérieure du carter de la machine tournante, ne coopère pas avec le moyen faisant support.

Un but de la présente invention est de proposer un dispositif de solid arisation d'une machine tournante sur un moteur de véhicule, ladite machine tournante étant constituée d'au moins une partie fixe et d'une partie mobile, la partie fixe étant constituée d'un carter, la partie mobile étant constituée d'au moins un axe destiné à être mis en rotation par un moyen d'entraînement lié au moteur et/ou la machine tournante, le carter de la machine tournante comportant un moyen de fixation destiné à coopérer avec un moyen faisant support, de sorte à pallier tout ou partie des inconvénients de l'art antérieur relevés ci-dessus.

A cette fin, le dispositif de solidarisation selon l'invention, par ailleurs conforme à la définition générique qu'en donne le préambule ci-dessus, est essentiellement caractérisé en ce que le moyen de fixation comprend au moins deux éléments de fixation faisant saillie hors de la périphérie extérieure du carter de la machine tournante, lesdits premier et second éléments de fixation étant disposés perpendiculaire l'un à l'autre.

Le dispositif de l'invention comprend avantageusement un moyen de fixation muni d'éléments de fixation disposés en parties supérieure et inférieure du carter de la machine tournante.

Par ailleurs, l'invention peut comporter l'une ou plusieurs des caractéristiques suivantes :
- l'ouverture de l'un des éléments de fixation est disposée tangentiellement à l'axe de rotation de la machine tournante, tandis que l'ouverture de l'autre élément de fixation est disposée parallèlement à l'axe de rotation,
- lesdits éléments de fixation comportent respectivement au moins une ouverture apte à coopérer avec un moyen de serrage, l'un des éléments de fixation étant sensiblement de forme tubulaire de sorte à répartir uniformément les efforts de solidarisation de la machine tournante sur le moyen faisant support,
- le moyen de fixation de la machine tournante coopère avec le moyen faisant support de sorte que les ouvertures disposées respectivement sur le moyen faisant support et le moyen de fixation sont alignées pour rendre apte la solidarisation de la machine tournante sur le moyen faisant support par l'intermédiaire du moyen de serrage, ledit moyen de serrage étant constitué d'au moins une vis de serrage,
- le moyen faisant support est une pièce distincte du moteur, ledit moyen faisant support étant alors une entretoise disposée entre la machine tournante et le moteur du véhicule.

D'autres particularités et avantages apparaîtront à la lecture de la description ci-après faite en référence aux figures dans lesquelles :
- la figure 1 est une vue en perspective d'une machine tournante agencée sur un support par l'intermédiaire du dispositif de solidarisation selon l'invention,
- la figure 2 est une vue de côté de l'agencement de la machine tournante de la figure 1, détaillant un second élément de fixation du dispositif de solidarisation, selon l'invention.

L'agencement d'une machine tournante, tel un alternateur ou un alterno-démarreur, sur un moteur de véhicule automobile, par exemple un moteur à combustion interne, nécessite généralement la présence d'un moyen de fixation, d'un moyen faisant support et d'un moyen de serrage.

Les machines tournantes connues se composent de préférence d'au moins un carter sensiblement de forme cylindrique muni de palier de sorte à rendre apte la rotation d'un axe de rotation à l'extrémité duquel est disposé une poulie destinée à entraîner un moyen de transmission de couple, telle une courroie.

Selon l'invention, le carter de la machine tournante est remarquable en ce qu'il comporte un moyen de fixation particulier.

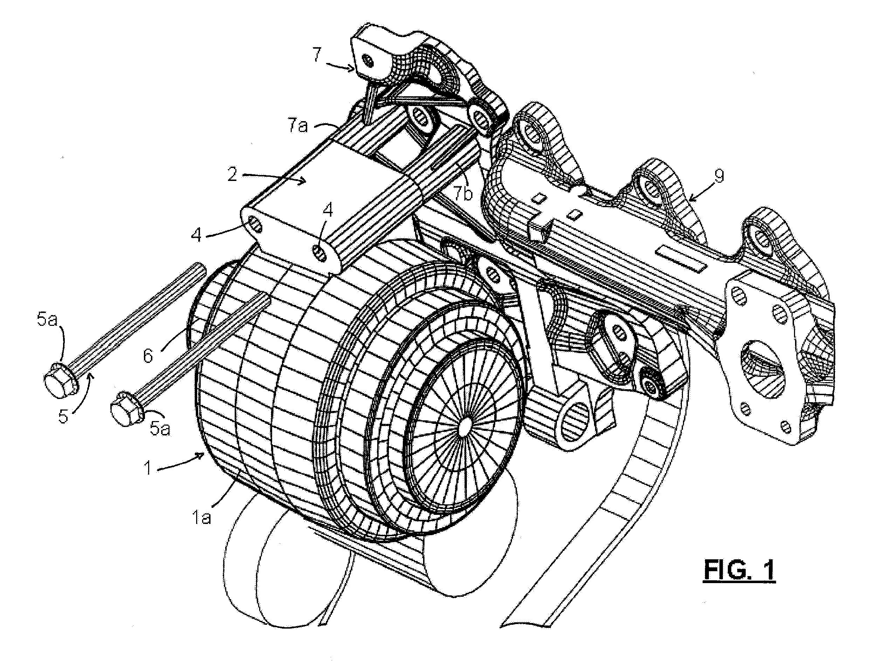

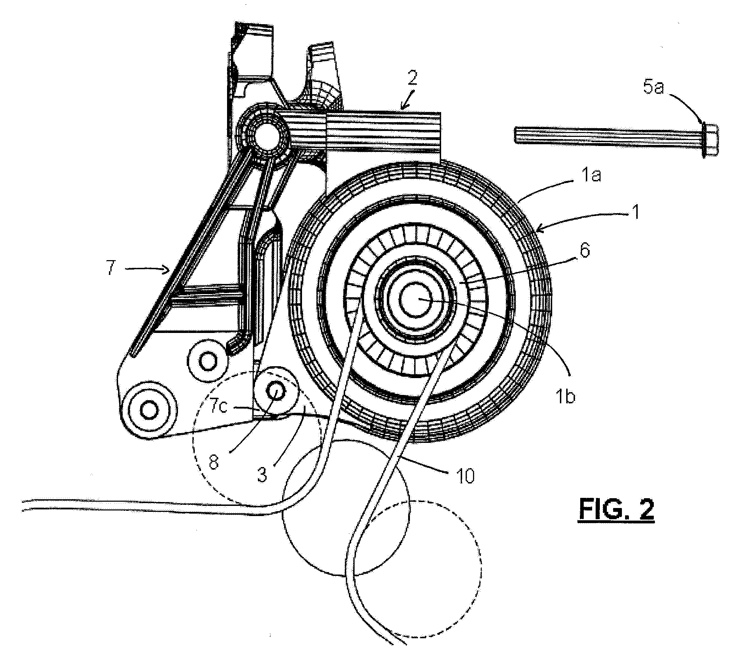

En effet, le moyen de fixation de la machine tournante, dont une illustration est faite en figures 1 et 2, donnée à titre d'exemple et de façon non limitative, est avantageux en ce sens qu'il permet un montage au plus proche d'organes appartenant au moteur, tel le collecteur d'échappement des gaz résultant de la combustion, donc un rehaussement de la machine tournante 1.

Par conséquent, ledit moyen de fixation de la machine tournante 1 est de préférence constitué de deux éléments de fixation 2 et 3 destinés à coopérer avec respectivement au moins un moyen de serrage 5.

Le moyen de serrage 5 est de préférence composé de vis dont les dimensions rendent possible leur disposition dans des ouvertures pratiquées dans les éléments de fixations 2 et 3.

Les deux éléments de fixation 2 et 3 font de préférence saillie hors de la périphérie extérieure du carter 1a de la machine tournante 1, et sont avantageusement disposés de manière perpendiculaire l'un à l'autre.

En effet, les éléments de fixation 2 et 3 sont remarquables en ce qu'ils permettent une répartition homogène des efforts de maintien de la machine tournante 1 sur le moyen de support 7, en ce sens qu'au moins une ouverture 4 de l'élément 2 de fixation disposé en partie supérieure est orientée selon un axe quasi tangentiel au carter 1a, alors qu'au niveau de la partie inférieure du carter, au moins une ouverture 8 de l'élément 3 de fixation est orienté de préférence selon un axe parallèle à l'axe de rotation 1b de la machine tournante.

Ainsi, le moyen de fixation de la machine tournante 1, constitué des deux éléments de fixation 2 et 3, et le carter la sont de préférence une pièce monobloc.

L'élément de fixation 2 est sensiblement du type à colonnette en ce sens qu'il est de forme tubulaire. L'élément 2 comporte au moins une ouverture 4, sensiblement de forme cylindrique, destinée à coopérer avec le moyen de serrage 5.

De préférence et tel qu'illustré en figure 1, l'élément de fixation 2 comporte deux ouvertures 4 afin de répartir les efforts de maintien de la machine tournante sur le moyen faisant support 7 en deux parties distinctes 7a et 7b.

Les parties 7a et 7b comportent des ouvertures cylindriques, de préférence taraudées afin de permettre au moyen de serrage 5, constitué de vis, d'assurer un rôle de solidarisation de la machine tournante 1 sur le moyen faisant support 7 par vissage. L'élément 2 de fixation est alors disposé entre une première butée 5a, définie par la tête de la vis de serrage 5, et une seconde butée définie par la surface d'appui des parties 7a et 7b du moyen faisant support 7.

L'élément de fixation 3 est sensiblement du type à oreillette en ce sens qu'il est sensiblement de la forme d'une patte de faible épaisseur, telle une bride de fixation, faisant saillie hors de la périphérie extérieure du carter 1a.

Tout comme l'élément de fixation 2, l'élément de fixation 3 comporte au moins une ouverture 8. L'ouverture 8 est sensiblement de forme cylindrique.

L'ouverture 8 est destinée à coopérer avec une partie 7c du moyen faisant support 7, ladite bride de fixation 7c étant disposée dans une direction sensiblement opposée à la bride de fixation 3 de la machine tournante 1, mais selon un même axe sensiblement perpendiculaire à l'axe de rotation 1b. La bride 7c de fixation du moyen faisant support comporte, tout comme l'élément de fixation 3, une ouverture cylindrique, de préférence taraudée selon un axe sensiblement parallèle à l'axe de rotation 1 b.

Les ouvertures de l'élément de fixation 3 de la machine tournante 1 et de la bride de fixation 7c du moyen faisant support 7 sont destinées à être disposées de manière adjacente et colinéaire, de sorte à rendre apte le vissage d'une vis (non représentée).

Un tel moyen de fixation, constitué des éléments de fixation 2 et 3, est remarquable en ce qu'il permet une solidarisation péren ne et de qualité de la machine tournante 1 sur le moteur, par l'intermédiaire du moyen faisant support 7. Les efforts de fixation sont, avec un tel dispositif de montage, uniformément répartis sur le moyen faisant support 7. En effet, un tel dispositif de solidarisation permet au moyen faisant support 7 de suspendre et de supporter ladite machine 1, respectivement par l'intermédiaire des éléments de fixation 2 et 3.

L'utilisation des éléments de fixation 2 et 3, respectivement du type à colonnette et à oreille, permet un rehaussement de la machine tournante 1 vers le collecteur d'échappement 9, c'est-à-dire vers le capot moteur du véhicule. Compte tenu qu'en partie inférieure de la machine tournante 1 se trouve généralement un compresseur de climatisation (non représenté) dont la position verticale est grandement définie par des contraintes liée à l'environnement dans lequel circule le véhicule, notamment un environnement comportant des trottoirs, le volume alloué à un dispositif de mise sous tension de la courroie de transmission 10 est alors sensiblement augmenté. Cela permet de recourir à de nouveaux types de dispositif de mise sous tension de la courroie.

De plus, le dispositif de solidarisation de l'invention rend le montage ou toute opération de maintenance de ladite machine tournante 1 plus aisé, le moyen de serrage 5 étant ainsi rendu plus accessible.

## Revendications

1. Dispositif de solidarisation d'une machine tournante (1) sur un moteur de véhicule, ladite machine tournante étant constituée d'au moins une partie fixe et d'une partie mobile, la partie fixe étant constituée d'un carter, la partie mobile étant constituée d'au moins un axe destiné à être mis en rotation par un moyen d'entraînement lié au moteur et/ou la machine tournante, le carter de la machine tournante comportant un moyen de fixation destiné à coopérer avec un moyen faisant support (7), **caractérisé en ce que** le moyen de fixation comprend au moins deux éléments de fixation (2, 3) faisant saillie hors de la périphérie extérieure du carter (1a) de la machine tournante (1), lesdits premier et second éléments (2, 3) de fixation étant disposés perpendiculaire l'un à l'autre.

2. Dispositif selon la revendication 1, **caractérisé en ce que** lesdits éléments (2, 3) de fixation sont respectivement disposés en parties supérieure et inférieure du carter (1a) de la machine tournante (1).

3. Dispositif selon la revendication 2, **caractérisé en ce que** l'ouverture (4) de l'élément (2) de fixation est disposée tangentiellement à l'axe (1b) de rotation de la machine tournante (1), et **en ce que** l'ouverture (8) de l'élément (3) de fixation est disposée parallèlement à l'axe (1 b) de rotation.

4. Dispositif selon la revendication 3, **caractérisé en ce que** lesdits éléments (2, 3) de fixation comportent respectivement au moins une ouverture (4, 8) apte à coopérer avec un moyen de serrage (5).

5. Dispositif selon l'une quelconque des revendications 1 à 4, **caractérisé en ce qu'**au moins un élément de fixation (2) est de forme tubulaire, l'élément de fixation (2) étant apte à répartir uniformément les efforts de solidarisation de la machine tournante (1) sur le moyen faisant support (7).

6. Dispositif selon l'une quelconque des revendications 1 à 5, **caractérisé en ce que** le moyen de fixation (2, 3) de la machine tournante (1) coopère avec le moyen faisant support (7), de sorte que les ouvertures disposées respectivement dans le moyen faisant support et le moyen de fixation sont alignées pour rendre apte la solidarisation de la machine tournante sur le moyen faisant support (7) par l'intermédiaire du moyen de serrage (5).

7. Dispositif selon l'une quelconque des revendications 1 à 6, **caractérisé en ce que** le moyen faisant support (7) est une pièce distincte du moteur, ledit moyen faisant support (7) étant alors une entretoise disposée entre la machine tournante (1) et le moteur du véhicule.

8. Dispositif selon la revendication 6, **caractérisé en ce que** ledit moyen de serrage (5) est constitué d'au moins une vis de serrage.
